# FASCICULE DE BREVET EUROPEEN

(11) **EP 3 034 826 B1**
(45) Date de publication et mention de la délivrance du brevet: **24.07.2019**
(21) Numéro de dépôt: 15199996.8
(22) Date de dépôt: 15.12.2015
(51) Int. Cl.: F01N 5/02

(54) **SOURCE DE REFROIDISSEMENT PAR ÉNERGIE ACOUSTIQUE**
QUELLE ZUM KÜHLEN MITTELS AKUSTISCHER ENERGIE
COOLING SOURCE USING ACOUSTIC ENERGY

(30) Priorité: 17.12.2014 FR 1462661; 30.07.2015 FR 1557309
(43) Date de publication de la demande: 22.06.2016
(73) Titulaire: SDMO Industries, 29200 Brest (FR)
(72) Inventeur: COURTES, Luc, 29830 SAINT-PABU (FR)
(74) Mandataire: IPAZ

(56) Documents cités:
- CN-A- 101 608 847
- JP-A- 2005 233 485
- US-A1- 2008 060 364
- US-A1- 2011 259 003

## Description

La présente invention concerne en général une source de refroidissement par énergie acoustique et, dans certains exemples, un refroidissement par énergie acoustique dans un parcours entre un système d'échappement et un système d'admission d'un moteur ou générateur.

Le document JP 2005 233 485 décrit un appareil comprenant un premier et un deuxième dispositif thermo-acoustique.

Un générateur ou un groupe électrogène peut comprendre un système d'entraînement, tel qu'un moteur ou une turbine, et un alternateur ou un autre dispositif pour générer une puissance ou de l'énergie électrique. Un ou plusieurs générateurs peuvent fournir une puissance à une charge à travers un bus de générateur et des disjoncteurs ou d'autres types de commutateurs. Un système de générateur comprenant au moins deux générateurs peut être connecté à un bus de générateur et à d'autres générateurs à travers des disjoncteurs. Chaque générateur peut comprendre un dispositif de commande de générateur local qui gère les disjoncteurs et les opérations de mise en parallèle avec les autres générateurs.

L'entrée pour le groupe générateur est le combustible et l'air. La sortie primaire est l'électricité et des sorties secondaires comprennent les gaz d'échappement et la chaleur. L'air et le combustible brûlent pour former des gaz d'échappement comprenant des sous-produits de combustion tels que la vapeur d'eau, le dioxyde de carbone et l'azote. Pour maximiser le rendement du groupe générateur, le moteur est refroidi à partir d'une variété de techniques. Toutefois, le système de refroidissement nécessite de l'énergie provenant d'une autre source. Cependant, quand l'eau froide n'est pas abondante, des défis demeurent pour fournir des mécanismes efficaces et effectifs pour refroidir le moteur et le générateur.

La présente invention répond à ce besoin en proposant un générateur selon la revendication 1.

Selon un mode de réalisation, l'entrée pour le système de refroidissement refroidit de l'air admis dans un ou plusieurs cylindres du moteur.

Selon un mode de réalisation, le premier dispositif thermo-acoustique comprend au moins un amplificateur de conversion chaleur/son en connexion thermique avec au moins un échangeur de chaleur du système d'échappement.

Selon un mode de réalisation, le deuxième dispositif thermo-acoustique comprend un système de conversion son/froid.

Selon un mode de réalisation, un tel générateur comprend en outre un milieu de transfert entre le premier dispositif thermo-acoustique et le deuxième dispositif thermo-acoustique.

La présente invention concerne enfin un ensemble de générateurs comprenant :
un système d'échappement pour l'ensemble de générateurs ;
un système de refroidissement pour l'ensemble de générateurs ;
un premier dispositif thermo-acoustique configuré pour convertir une énergie thermique provenant du système d'échappement pour amplifier une onde acoustique ; et un deuxième dispositif thermo-acoustique configuré pour convertir une énergie dans l'onde acoustique amplifiée en une entrée pour le système de refroidissement.

A titre d'exemple, des mises en oeuvre sont décrites ci-après en référence aux dessins annexés.
La **figure 1** représente un exemple de système de conversion d'énergie pour un générateur.
La **figure 2** représente un exemple d'échangeur de chaleur à haut rendement.
La **figure 3** représente un exemple de système thermo-acoustique.
La **figure 4** représente un autre exemple de système thermo-acoustique.
La **figure 5** représente un autre exemple d'un moteur et d'un système thermo-acoustique, qui est selon l'invention.
La **figure 6A** représente un exemple de système thermo-acoustique à trois états, qui est selon l'invention.
La **figure 6B** représente une turbine bidirectionnelle à mouvement de flux acoustique, qui est selon l'invention.
La **figure 7A** représente un système thermo-acoustique cylindrique, qui est selon l'invention.
La **figure 7B** représente un exemple de système thermo-acoustique 20 comprenant une turbine bidirectionnelle, qui est selon l'invention.
La **figure 8** représente un exemple de configuration de rétroaction acoustique, qui est selon l'invention.
La **figure 9** représente un autre exemple d'un moteur et d'un système thermo-acoustique, qui est selon l'invention.
La **figure 10** représente un exemple de moteur et de système thermo-acoustique, qui est selon l'invention.
La **figure 11** représente un exemple de système d'entraînement et de système thermo-acoustique, qui est selon l'invention.
La **figure 12** représente un exemple d'un ensemble de groupes générateurs, qui est selon l'invention.
La **figure 13** représente un exemple de dispositif de commande pour n'importe lequel des systèmes ci-dessus, qui est selon l'invention.

Un système de refroidissement pour un générateur ou un moteur peut refroidir l'air d'admission circulant dans les cylindres du moteur. Le système d'entraînement peut également être refroidi pour maintenir des températures critiques pour les composants du système d'entraînement et l'huile ou les lubrifiants qui recouvrent les composants mobiles du système d'entraînement (par exemple, les pistons) et réduire la friction. Des exemples de mécanismes pour refroidir le système d'entraînement comprennent des radiateurs, qui peuvent être refroidis par air ou refroidis par liquide. Le liquide, ou réfrigérant de moteur, peut être l'eau, surtout quand l'eau froide est abondante (par exemple, des applications marines près d'une étendue d'eau). En variante, un système de refroidissement par eau peut effectuer une recirculation de l'eau à travers le système de refroidissement. L'eau peut être refroidie par l'atmosphère ou une autre source, chauffée par le système d'entraînement, et le processus est répété.

Les modes de réalisation suivants utilisent des dispositifs thermo-acoustiques pour transporter de l'énergie pour le système de refroidissement en utilisant une onde acoustique longitudinale pour faciliter une interaction entre des variations de température, de densité et de pression. Le son est une variation de pression et un mouvement d'oscillation d'un milieu (par exemple, air, gaz, liquide ou solide). Les sons peuvent être provoqués par la température (par exemple, la chaleur). La chaleur est transférée en son et le son peut être transféré en mouvement ou une autre forme d'énergie pour générer une énergie de refroidissement.

Les modes de réalisation suivants fournissent des systèmes et des procédés pour exploiter l'énergie dans l'échappement d'un système d'entraînement comme la chaleur pour entraîner un système thermo-acoustique qui convertit l'énergie pour fournir une entrée pour le système de refroidissement du système d'entraînement ou l'admission d'air du moteur.

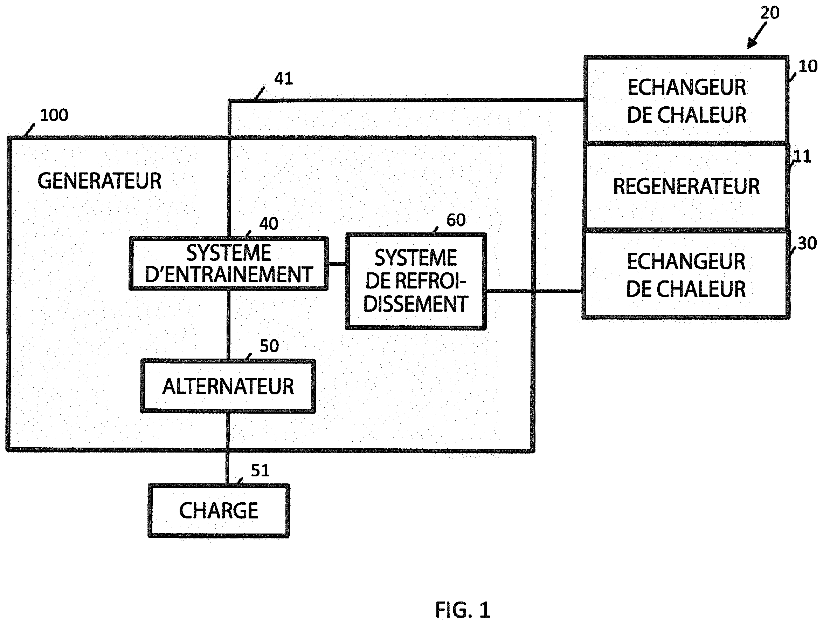

La **figure 1** représente un exemple de système de conversion d'énergie pour un générateur 100. Le système de conversion d'énergie comprend le système thermo-acoustique 20 comprenant un échangeur de chaleur 10, un régénérateur 11 et un échangeur de chaleur 30. Le générateur 100 comprend un système d'entraînement 40, un alternateur 50 et un système de refroidissement 60. Le système d'entraînement 40 fait tourner une machine motrice de l'alternateur 50, qui convertit une énergie mécanique en énergie électrique pour alimenter la charge 51 en électricité. De plus, des composants différents ou moins de composants peuvent être inclus.

Le système d'entraînement 40 pour la conversion mécanique-électrique peut être un moteur à combustion interne ou une turbine. La turbine peut comprendre un rotor avec des pales symétriques. Un fluide en mouvement agit sur les pales symétriques pour communiquer une énergie de rotation à un rotor ou arbre. Dans le moteur à combustion interne, une combustion de combustible dans le moteur applique une force à un ou plusieurs pistons qui font tourner un arbre. Dans l'un ou l'autre exemple, la force de rotation fait tourner l'alternateur 50, qui convertit l'énergie mécanique en énergie électrique pour alimenter la charge 51 en électricité.

En plus de la production d'énergie mécanique pour l'alternateur 50, le système d'entraînement 40 produit un échappement. L'échappement comprend de la chaleur. L'échappement quitte le système d'entraînement 40 à travers un tube d'échappement 41. Des exemples de températures pour l'échappement peuvent être de 200 à 600 degrés Celsius. La température de l'échappement peut dépendre du combustible du système d'entraînement 40. Des exemples de combustibles comprennent l'essence, le kérosène, le carburant diesel, le gaz de pétrole liquéfié (GPL) ou des combustibles gazeux tels que l'hydrogène, le gaz naturel, le biogaz ou un autre gaz.

Le régénérateur 11 peut être un milieu de stockage thermique pris en sandwich entre l'échangeur de chaleur 10 et l'échangeur de chaleur 30. Le rôle des échangeurs de chaleur est soit d'ajouter de la chaleur au gaz de travail du système thermo-acoustique 20, ce qui est le cas d'un échangeur de chaleur chaud tel que l'échangeur de chaleur 10, soit d'enlever de la chaleur du gaz de travail, ce qui est le cas d'un échangeur de chaleur froid tel que l'échangeur de chaleur 30.

Dans le système thermo-acoustique 20 (cellule thermo-acoustique), l'onde acoustique peut être induite par le gradient de température sur le régénérateur 11, qui est dû à une différence de température entre deux échangeurs de chaleur 10 et 30. Quand il existe déjà une onde acoustique induite ou imposée au régénérateur 11, l'onde acoustique peut être amplifiée à l'intérieur du régénérateur 11.

Les échangeurs de chaleur 10 et 30 peuvent être conçus pour ajouter ou enlever de la chaleur au ou du gaz de travail. Les échangeurs de chaleur 10 et 30, à travers le système de refroidissement 60, peuvent enlever de la chaleur de ou refroidir l'air qui est admis dans les cylindres de moteur. Le pourcentage auquel la chaleur est ajoutée ou retirée définit le rendement de l'échangeur de chaleur.

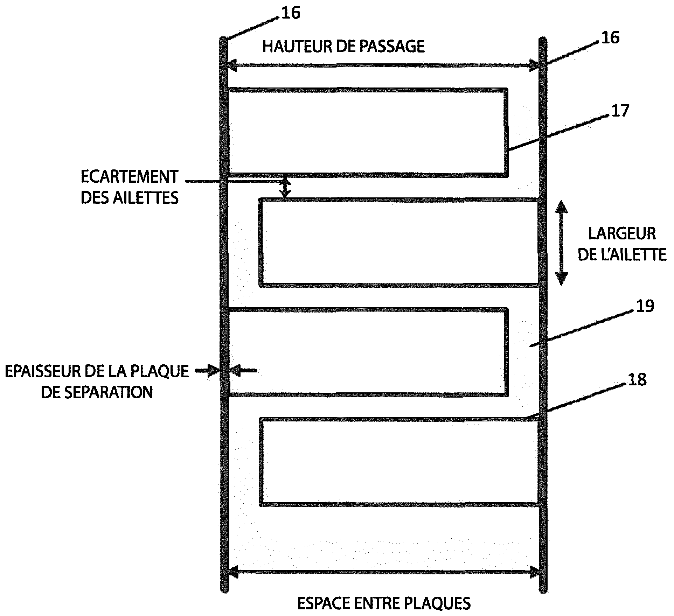

La **figure 2** représente un échangeur de chaleur à haut rendement, l'échangeur de chaleur « multicanaux type 2 ». L'échangeur de chaleur comprend deux plaques 16 qui sont séparées par un espace entre plaques pour former le logement de l'échangeur de chaleur. Les plaques 16 supportent de multiples plaques 17. Le fluide de travail oscille à l'intérieur du passage 19 formé par l'espacement des ailettes et l'espace entre plaques, comme illustré sur la **figure 2****.** Les ailettes ont une épaisseur dans la page, qui n'est pas illustrée. Les plaques 16 peuvent avoir une épaisseur suffisante pour maintenir un fluide pour ajouter ou enlever de la chaleur à/de la surface pleine de l'échangeur de chaleur.

L'échangeur de chaleur 10 transfère la chaleur dans l'échappement vers le système thermo-acoustique 20. Dans un premier processus thermo-acoustique, le système thermo-acoustique 20 amplifie une onde acoustique à partir de l'énergie dans la chaleur. Dans un deuxième processus thermo-acoustique, l'onde acoustique amplifiée commande une pompe à chaleur pour enlever la chaleur et provoquer une réfrigération. La réfrigération ou le déficit de chaleur est transféré par l'échangeur de chaleur 30 au système de refroidissement 60.

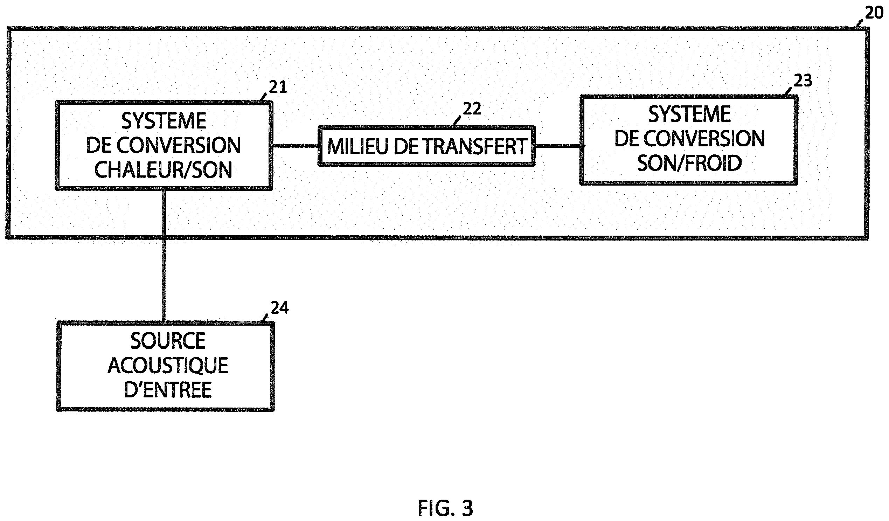

La **figure 3** représente le système thermo-acoustique 20 comprenant un système de conversion chaleur/son 21 (premier dispositif thermo-acoustique), un milieu de transfert 22 (par exemple, le régénérateur 11), et un système de conversion son/froid 23 (deuxième dispositif thermo-acoustique). Le système de conversion chaleur/son 21 peut recevoir un signal d'entrée d'une source acoustique d'entrée 24. Le signal d'entrée peut être un son généré par un générateur électroacoustique. Le générateur électroacoustique peut être piézoélectrique. Un exemple de signal d'entrée peut avoir un signal à basse fréquence (par exemple, moins de 100 Hertz). Le système de conversion chaleur/son 21 peut comprendre une cellule thermo-acoustique et le système de conversion son/froid 23 peut comprendre une autre cellule thermo-acoustique.

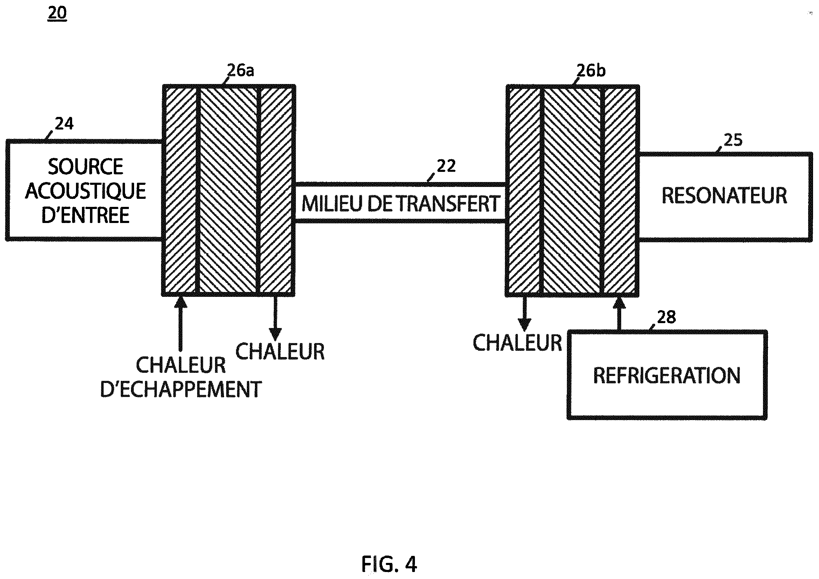

La **figure 4** représente le système thermo-acoustique 20 comprenant une première cellule thermo-acoustique 26a et une deuxième cellule thermo-acoustique 26b. Chaque cellule thermo-acoustique peut comprendre un échangeur de chaleur sur chaque côté d'un empilement. L'empilement est un matériau solide avec des pores qui permettent à un fluide gazeux d'osciller alors qu'il est en contact avec le matériau solide. L'empilement peut être formé de multiples couches ou rangées du matériau espacées étroitement entre elles. Le matériau de l'empilement peut être sélectionné pour avoir une basse conductivité thermique et une capacité thermique supérieure à la capacité thermique du gaz oscillant de manière que la température de l'empilement soit stable. Des exemples de matériaux pour l'empilement comprennent divers polymères, résines, céramiques et le polyéthylène téréphtalate.

En fonction de la diffusivité thermique du gaz, la chaleur est diffusée à travers le gaz. Autrement dit, l'empilement facilite l'oscillation du gaz provenant du son à transférer en chaleur. De manière analogue, l'introduction de chaleur dans la cellule thermo-acoustique augmente l'oscillation du gaz et amplifie le son. Les deux principes sont présentés dans le système thermo-acoustique 20.

La chaleur provenant de l'échappement est introduite dans la première cellule thermo-acoustique 26a. L'énergie provenant de la chaleur amplifie le petit signal d'onde acoustique provenant de la source acoustique d'entrée 24 à un signal d'onde acoustique plus grand qui se propage à travers le milieu de transfert 22 à la deuxième cellule thermo-acoustique 26b. Une certaine chaleur peut être perdue par un échangeur de chaleur en option en aval de l'empilement de la première cellule thermo-acoustique 26a.

Le signal d'onde acoustique plus grand se propage à travers le milieu de transfert 22. Le milieu de transfert 22 peut comprendre un solide, un liquide ou un gaz. Dans un exemple, le milieu du milieu de transfert 22 est un gaz noble tel que l'hélium. Le signal d'onde acoustique peut avoir une puissance de l'ordre de 1-100 kilowatts (kW), par exemple 10 kW. Le signal d'onde acoustique plus grand peut être atténué de manière minimale par le milieu de transfert 22.

Quand le signal d'onde acoustique plus grand arrive à la deuxième cellule thermo-acoustique 26b, une certaine chaleur peut être perdue initialement au niveau de l'échangeur de chaleur en option en amont de l'empilement de la deuxième cellule thermo-acoustique 26b. Le signal d'onde acoustique plus grand fait osciller le gaz dans l'empilement de la deuxième cellule thermo-acoustique 26b en provoquant un flux de chaleur vers l'intérieur. La chaleur s'écoule à partir de l'unité de réfrigération 26 dans la deuxième cellule thermo-acoustique 26b.

Le résonateur en option 25 permet de définir une onde stationnaire pour le système thermo-acoustique 20. La fréquence de résonance du résonateur 25 dépend des caractéristiques dimensionnelles du tube ou de la chambre. La fréquence de la source acoustique d'entrée 24 et le matériau et les dimensions du milieu de transfert 22 peuvent être sélectionnés sur la base de la fréquence de résonance du résonateur 25.

La température de l'unité de réfrigération 26 est abaissée par l'échangeur de chaleur en aval de l'empilement de la deuxième cellule thermo-acoustique 26b. La chaleur est pompée hors de l'unité de réfrigération 28 dans l'échangeur de chaleur. L'unité de réfrigération 28 peut refroidir de l'eau ou un autre réfrigérant pour le système d'entraînement 40.

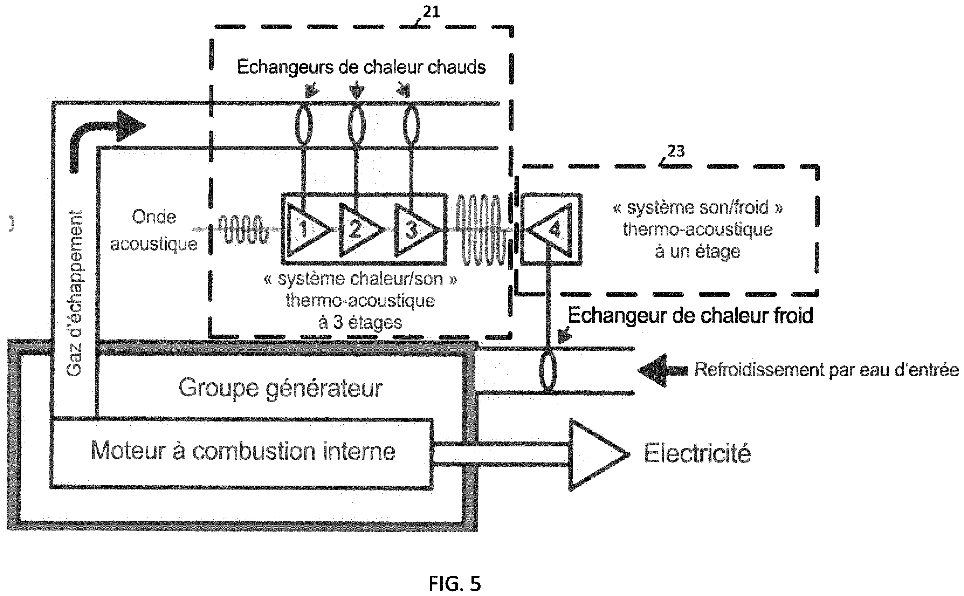

La **figure 5** est un exemple selon l'invention d'un moteur et d'un système thermo-acoustique. Dans cet exemple, le système de conversion chaleur/son 21 peut comprendre de multiples étages thermo-acoustiques. Chaque étage thermo-acoustique peut comprendre un empilement avec des échangeurs de chaleur adjacents, comme décrit ci-dessus. Chaque étage peut avoir un effet réducteur en termes de rendement. Par exemple, le rendement du premier étage est supérieur au rendement du deuxième étage, et ainsi de suite. Toutefois, le rendement global augmente lorsque le nombre d'étages augmente. De plus, chaque étage thermo-acoustique peut être couplé à un échangeur de chaleur d'échappement ou un radiateur qui transfère la chaleur des gaz ou du tuyau d'échappement à l'étage thermo-acoustique respectif. Les multiples étages thermo-acoustiques peuvent être logés dans la même enceinte. Un exemple de dimensions pour l'enceinte peut être un cylindre ayant une hauteur de 40 à 100 cm (par exemple, 60 cm) et un diamètre de 40-100 cm (par exemple, 60 cm). Un exemple de nombre d'étages est trois, comme représenté sur la **figure 5****.** Un exemple de variation de pression entre l'entrée sur le premier étage et la sortie de l'étage final peut être 40 bars. Un exemple de variation de puissance entre l'entrée sur le premier étage et la sortie de l'étage final peut être 20-40 kW.

Les entrées dans le système de conversion chaleur/son 21 sont la chaleur provenant de l'échappement et une onde acoustique avec un niveau de puissance nominal. La sortie du système de conversion chaleur/son 21 est l'onde acoustique amplifiée transmise au système de conversion son/froid 23. Le système de conversion son/froid, bien qu'il soit représenté avec un seul étage, peut également comprendre de multiples étages thermo-acoustiques. Chaque étage thermo-acoustique peut comprendre un empilement avec des échangeurs de chaleur adjacents, comme décrit ci-dessus. L'enceinte du système de conversion son/froid peut être un cylindre de 20-40 cm de haut et ayant un diamètre de 40-100 cm (par exemple, 60 cm). La sortie du système de conversion son/froid 23 refroidit l'eau d'entrée pour le moteur à combustion interne. En d'autres termes, le système de conversion son/froid 23 pompe la chaleur jusqu'à lui-même, en refroidissant l'eau ou le liquide d'entrée par l'intermédiaire de l'échangeur de chaleur ou du radiateur.

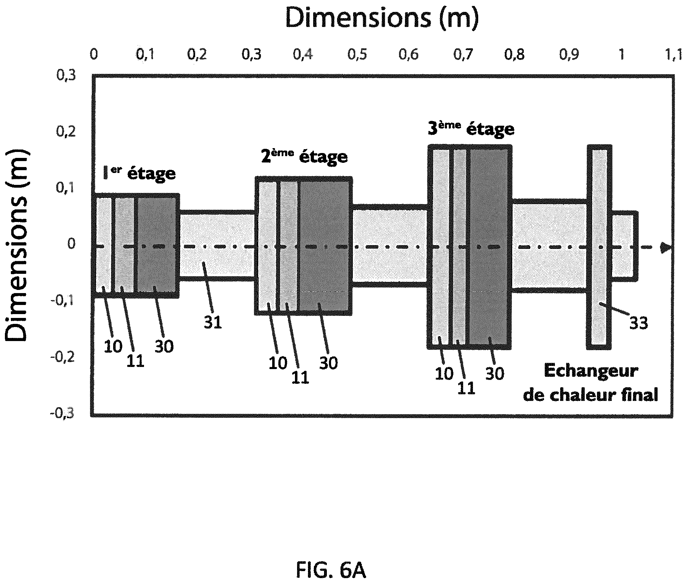

La **figure 6A** représente selon l'invention un exemple de système thermo-acoustique à trois étages. Chacun parmi le premier étage, le deuxième étage et le troisième étage comprend un échangeur de chaleur froid 10, un régénérateur 11 et un échangeur de chaleur chaud 30. Le système thermo-acoustique peut être enfermé dans un conteneur isolé. Les étages sont connectés par un tube 31 qui transporte le gaz de travail et l'onde acoustique. L'échangeur de chaleur final 33 empêche des fuites de chaleur par échange thermique à l'extérieur du conteneur isolé. Les trois étages du système thermo-acoustique peuvent être sélectionnés de manière à délivrer le maximum de puissance nette acoustique. Un étage, deux étages ou quatre étages ou plus peuvent être utilisés dans le système thermo-acoustique. La performance des trois étages affecte la performance du système d'entraînement 40 et du générateur 100.

Dans un exemple, le système thermo-acoustique augmente le rendement du système d'entraînement 40 de 10 %, ce qui signifie que le système thermo-acoustique délivre une puissance électrique nette (P) (par exemple, 14 kW). Toutefois, en raison du rendement (e) (par exemple, 0,8) de la turbine, le système thermo-acoustique devrait travailler pour délivrer environ une puissance P/e (par exemple, 14kW/0,8 = 17,5 kW). Le tableau 1 liste des exemples de dimensions et de températures pour les trois étages du système thermo-acoustique.

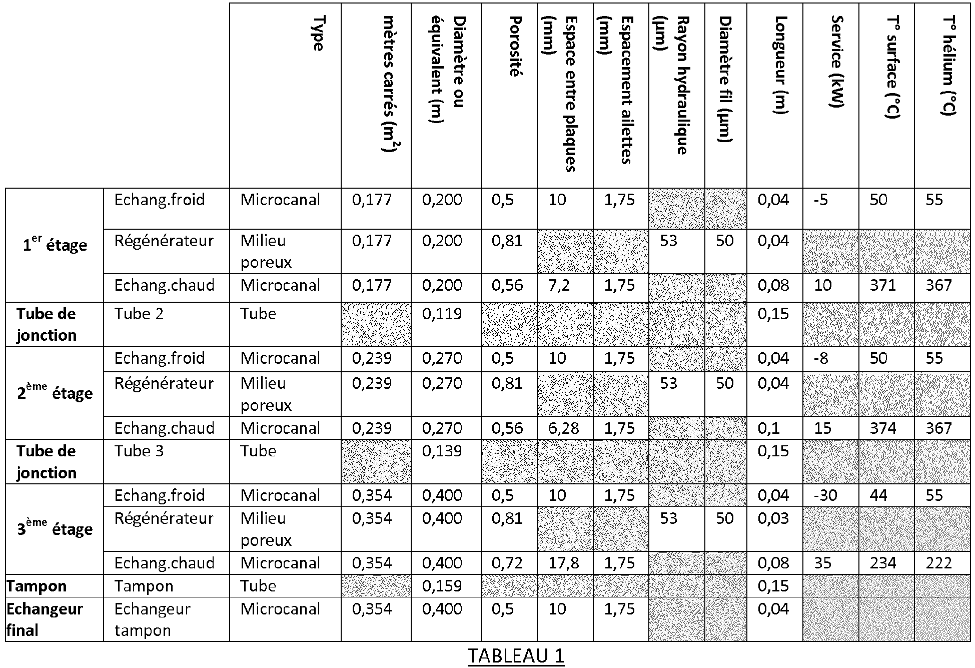

La température du matériau de changement de phase ne peut pas dépasser une température critique T (par exemple, 380 °C). Une chaleur peut être extraite dans les premier et deuxième récupérateurs tout en maintenant une haute température dans les premier et deuxième échangeurs de chaleur. La chaleur disponible est la chaleur qui peut être extraite des gaz de fumées sans atteindre la température de rosée D (180 °C). Les propriétés des gaz d'échappement sont détaillées dans le **Tableau 2.**

**TABLEAU 2**

| Gaz d'échappement | |
|---|---|
| Température d'échappement | 495,00 °C |
| Température de rosée | 180,00 °C |
| Densité | 0,45 kg/m3 |
| Débit massique | 0,21 kg/s |
| Capacité thermique isobare | 1180,00 J/kg.K |
| Chaleur disponible | 78,06 kW |

Les caractéristiques et dimensions qui ne changent pas pour les trois étages sont illustrées dans le **Tableau 2.** Le paramètre clé pour obtenir la puissance thermique cible est le nombre de rangées ou de couches dans un étage qui varie en fonction de la surface d'échange de chaleur. Une réduction de la superficie de la surface d'échange de chaleur augmente le nombre de rangées ou de couches dans un étage. La profondeur de la zone d'échange de chaleur, comparée à la longueur du système thermo-acoustique 20, la perte de pression et la vitesse des fumées sont utilisées pour sélectionner la conception des étages. Il existe un compromis entre le nombre de (étages/plaques dans un étage) et les différentes contraintes géométriques et physiques. Dans un exemple, une superficie de 600 x 600 millimètres carrés (mm²) avec une seule rangée pour le premier évaporateur, six rangées pour le deuxième et dix rangées pour le troisième. La profondeur totale de trois étages peut être de 600 mm.

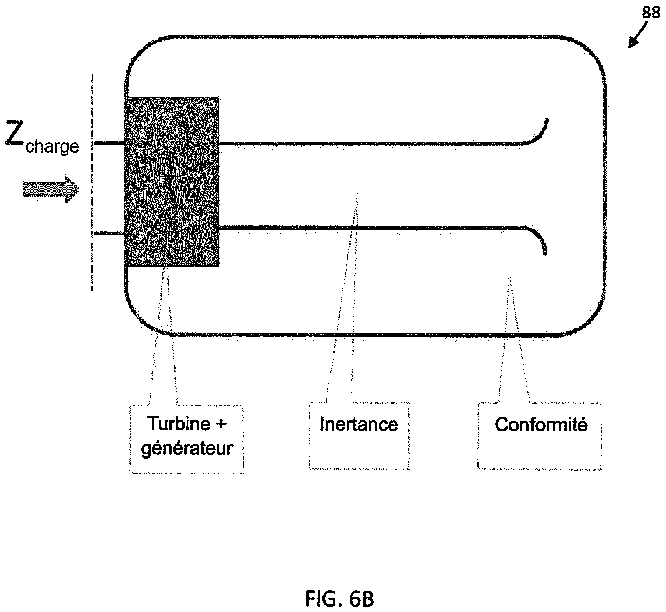

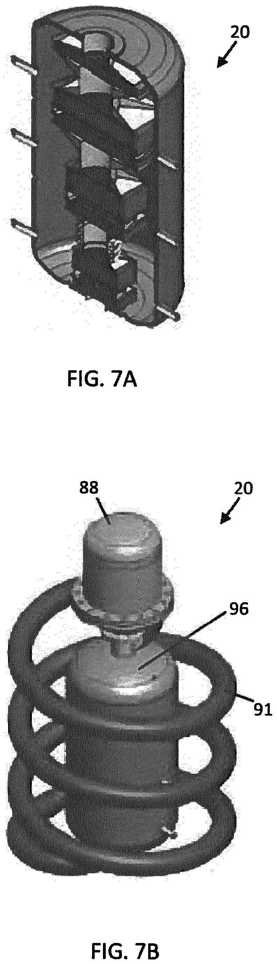

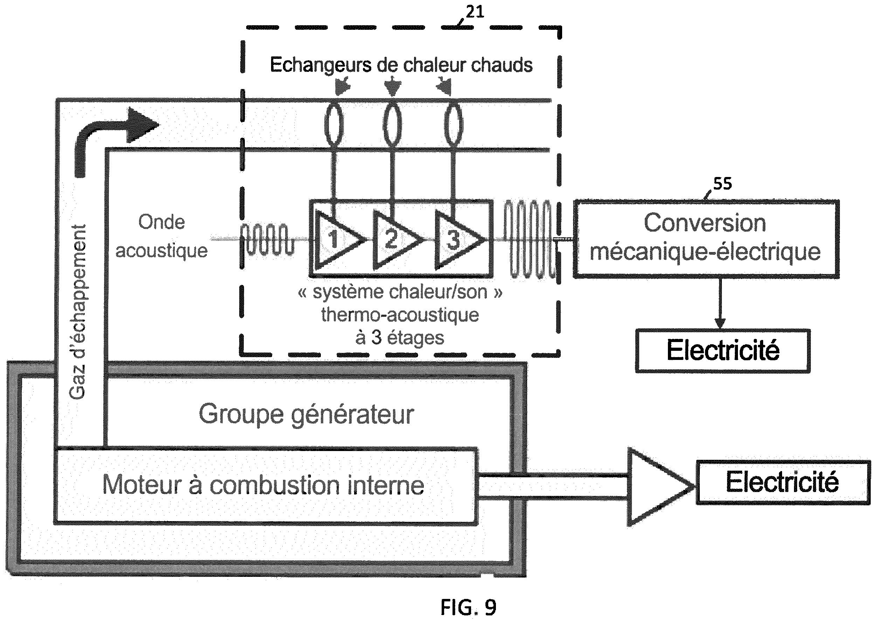

La **figure 6B** représente selon l'invention une géométrie de turbine bidirectionnelle à mouvement de flux acoustique 88. La turbine, qui peut être un système récepteur en communication de fluide avec n'importe lequel des systèmes de rétroaction décrits ci-dessous (par exemple, **figure 7B****,** **figure 9**). L'inertance représente une différence de pression dans le fluide afin de faire varier un débit dans le temps. La souplesse ou conformité représente la résistance ou la facilité avec laquelle le fluide est comprimé. Conjointement, l'inertance et la souplesse peuvent produire des oscillations acoustiques analogues aux oscillations électriques d'une inductance et d'une capacité dans un circuit électrique à courant alternatif.

La **figure 7A** représente selon l'invention un système thermo-acoustique 20 qui est cylindrique. Les premier, deuxième et troisième étages sont agencés verticalement. Ceci a l'avantage d'être adapté pour l'utilisation de composants standard et de permettre de réaliser des enceintes sous pression mais également de réduire les pertes thermiques par conduction en réduisant l'épaisseur entre les différentes parties de la ligne thermo-acoustique.

La **figure 7B** représente selon l'invention un système thermo-acoustique 20 comprenant la géométrie de turbine bidirectionnelle 88 représentée sur la **figure 6B****,** un système de rétroaction 91 et une turbine 95. Le système de rétroaction 91 peut comprendre un tube en spirale pour la recirculation du gaz de travail à travers le système thermo-acoustique 20. La turbine 95 peut comprendre un rotor avec des pales symétriques qui sont entourées par deux ensembles d'aubes directrices. Les formes des pales peuvent être sélectionnées sur la base du type de fluide ou du gaz de travail ou de la densité du fluide ou du gaz de travail. Le système de rétroaction 91 peut être en communication avec un système récepteur tel que la turbine 88 de la **figure 6B****.**

La turbine peut être bidirectionnelle. La performance des turbines (bidirectionnelles) dépend, parmi d'autres paramètres, de la densité du fluide de travail. Des moteurs thermo-acoustiques peuvent fonctionner à des pressions moyennes élevées jusqu'à 40 bars et cette densité de gaz élevée peut augmenter le rendement de la turbine jusqu'à 85 %. Ceci fait des turbines bidirectionnelles un candidat économique et flexible pour convertir la puissance acoustique générée en électricité.

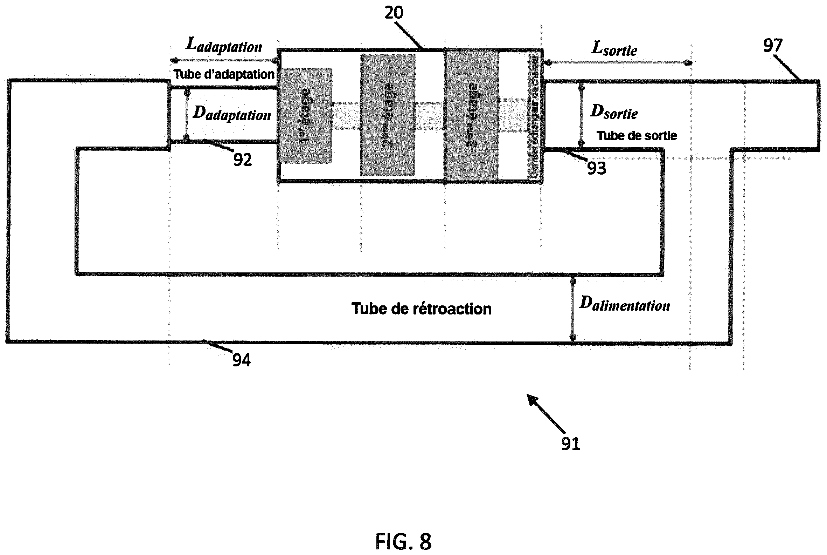

La **figure 8** représente selon l'invention un autre système de rétroaction 91 ou une configuration de rétroaction acoustique. Le système de rétroaction peut comprendre un tube d'entrée 92, un tube de sortie 93 et un tube de rétroaction 94. Les dimensions du tube d'entrée 92 peuvent être sélectionnées pour correspondre au système thermo-acoustique 20. Les dimensions du tube d'entrée 92 peuvent être sélectionnées pour correspondre à la fréquence de résonance du système thermo-acoustique 20. Le tube de sortie 93 est connecté au système de refroidissement 60 du générateur 100 et au tube de rétroaction 94. Le tube de rétroaction 94 retourne le gaz de travail au tube d'entrée 92 pour une traversée additionnelle du système thermo-acoustique 20. Une sortie 97 du système de rétroaction 91 peut être en communication avec un système récepteur tel que la turbine de la **figure 6B****.**

Dans un exemple, la configuration de rétroaction acoustique délivre 14 kW de puissance électrique, quand la turbine a un rendement de 80 %. Le système peut extraire 60 kW de flux thermique (77 % du flux thermique disponible) avec un rendement thermique global de 24 %. Le rendement exergétique du système peut être égal à 41 % (Carnot est calculé en fonction de la plus haute température (495 °C) et de la plus basse température (37 °C) du système). Le **Tableau 3** indique la performance de la configuration de rétroaction acoustique.

**TABLEAU 3**

| | | |
|---|---|---|
| | Rendement thermique | 0,42 |
| 1^{er} étage | Facteur de viscosité dans le régénérateur | 0,71 |
| | Rendement thermique | 0,47 |
| 2^{ème} étage | Facteur de viscosité dans le régénérateur | 0,75 |
| | Rendement thermique | 0,2 |
| 3^{ème} étage | Facteur de viscosité dans le régénérateur | 0,87 |
| **Puissance acoustique nette (kW)** | | **17,85** |
| Rendement acoustique global | | 0,3 |
| Rendement acoustique de Carnot | | 0,57 |
| Amplitude de pression à la charge (kPa) | | 114 |
| **Puissance électrique prévue (kW)** | | **14,28** |
| Rendement supposé de la turbine | | 0,80 |
| Rendement global | | 0,24 |
| Rendement exergétique global | | 0,41 |

La **figure 9** est selon l'invention un autre exemple d'un moteur et d'un système thermo-acoustique. Dans cet exemple, le système de conversion chaleur/son 21 fonctionne de manière similaire aux descriptions qui précèdent, mais au lieu du système de conversion son/froid 23, le système comprend un système de conversion mécano-électrique 55 (par exemple, une turbine). Le système de conversion mécano-électrique 55 peut correspondre à la turbine 55 de la **figure 7B** et/ou à la turbine de la **figure 6B****.**

Le système de conversion mécano-électrique 55 peut être combiné avec n'importe lequel des modes de réalisation décrits ici. Le système de conversion mécano-électrique 55 peut être une turbine telle qu'une turbine bidirectionnelle qui génère de l'électricité à partir du signal acoustique amplifié. La pression provenant des ondes sonores peut faire tourner une turbine, ou faire osciller un vilebrequin et un piston, qui fait tourner un arbre. La rotation peut faire tourner un rotor et/ou un enroulement d'induit et générer une puissance électrique. La puissance électrique peut être utilisée comme une composante additionnelle de la puissance électrique du générateur 100. La puissance électrique peut être convertie en courant continu, lequel peut alimenter un système auxiliaire du générateur 100. Un exemple de système auxiliaire est le tableau de commande ou un affichage pour le générateur 100. La puissance électrique peut commander un excitateur ou un enroulement de champ pour le générateur 100.

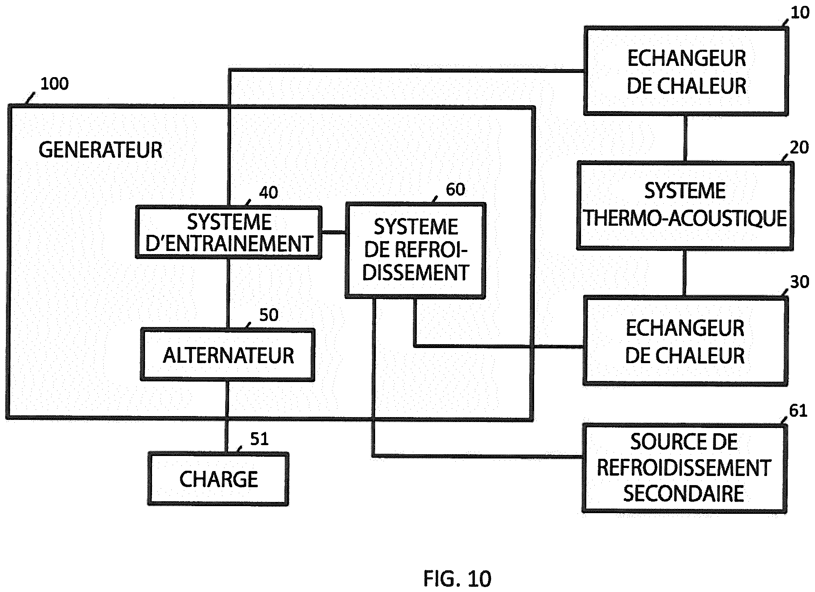

La **figure 10** est selon l'invention une autre illustration d'un système d'entraînement et d'un système thermo-acoustique. En plus de l'effet de refroidissement fourni par l'échangeur de chaleur 30 à partir du système thermo-acoustique 20, le système comprend une source de refroidissement secondaire 61. La source de refroidissement secondaire 61 peut être nécessaire en raison du temps qui peut être nécessaire pour que le système thermo-acoustique 20 atteigne un état stable. De plus, la deuxième source de refroidissement 61 peut compléter le refroidissement primaire du système thermo-acoustique quand des conditions sont inefficaces ou un refroidissement additionnel est nécessaire.

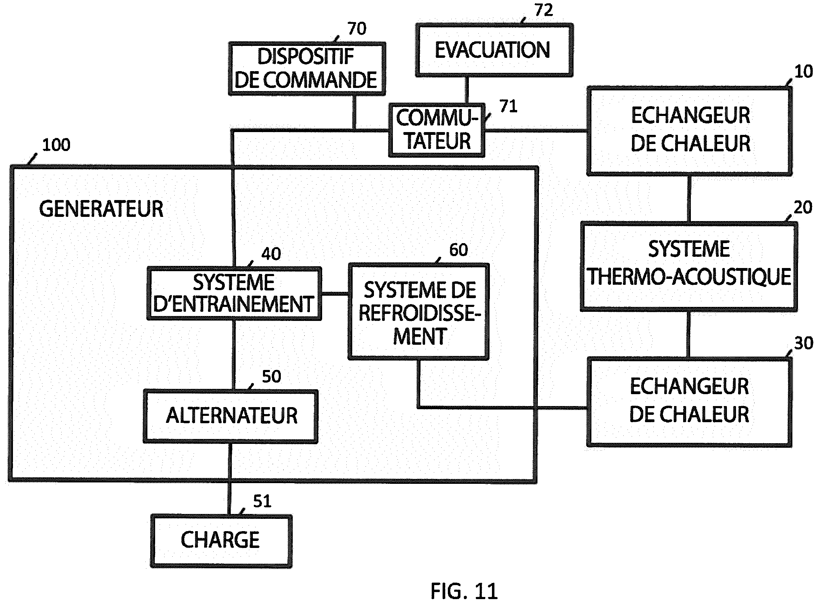

La **figure 11** est selon l'invention une autre illustration d'un moteur et d'un système thermo-acoustique. Le système de la **figure 11** comprend un dispositif de commande 70 et un commutateur 71. Le dispositif de commande 70 peut comprendre un thermomètre ou une thermistance pour surveiller la température du gaz d'échappement. Le dispositif de commande 70 peut commander le commutateur 71 pour activer ou désactiver le système thermo-acoustique. Le commutateur 71 peut comprendre une vanne mécanique qui commande de manière variable le flux d'échappement provenant du moteur 40 jusqu'à l'échangeur de chaleur 10 ou jusqu'au système d'évacuation 72. Le commutateur 71 peut comprendre un commutateur électrique qui allume et éteint la source acoustique.

Dans un exemple, le dispositif de commande 71 peut comparer la température des gaz d'échappement avec un ou plusieurs seuils. Le système thermo-acoustique peut être utilisé seulement dans une plage de températures prédéterminée. Dans un autre exemple, la quantité de gaz d'échappement qui peut être déviée jusqu'au système thermo-acoustique peut être une fonction de la température. Par exemple, le système d'entraînement 40 peut commencer à tourner à une température inférieure, quand les gaz d'échappement atteignent le seuil de température, le dispositif de commande 70 et le commutateur 71 commutent l'échappement du système d'évacuation 72 à l'échangeur de chaleur 10, et finalement au système thermo-acoustique 20. Dans un autre exemple, le dispositif de commande 70 peut identifier quand la température d'échappement devient trop élevée et peut endommager l'échangeur de chaleur 10 ou le système thermo-acoustique 20. Dans un autre exemple, la température est mesurée au niveau d'une autre portion du générateur 100 telle que l'alternateur 50. La température de l'alternateur 50 peut être calculée sur la base d'une mesure de résistance dans les bobines de l'alternateur 50 ou calculée sur la base d'une sortie ou charge sur l'alternateur 50.

Dans un exemple, le dispositif de commande 71 est couplé physiquement au générateur 100. Le dispositif de commande 71 peut être inclus dans un panneau de commande monté sur ou près du générateur 100. Dans un autre exemple, le dispositif de commande 71 est éloigné du générateur 100 et le dispositif de commande 71 surveille à distance le générateur 100, le système d'entraînement 40, le système thermo-acoustique 20, le système de refroidissement 60 ou l'échappement. Par exemple, le générateur 100 peut être situé dans une installation (par exemple, usine, navire) et le dispositif de commande 71 est situé dans une salle de commande ou une installation de commande. Pour faciliter la communication, le générateur 100 peut comprendre un dispositif ou une interface de communication. La communication entre le dispositif de commande 71 et le générateur peut être par câble ou sans fil. L'interface de communication du générateur 100 peut être associée à une adresse de protocole Internet et la communication est effectuée à travers Internet. L'interface de communication du générateur 100 et le dispositif de commande 71 peuvent être configurés pour une communication utilisant la famille de protocoles connue comme Bluetooth®, la famille de protocoles connue comme 802.11, une communication cellulaire ou une autre communication sans fil.

En plus ou en variante à l'entrée de données à partir du générateur 100, du système d'entraînement 40, du système thermo-acoustique 20, du système de refroidissement 60 et/ou de l'échappement, le dispositif de commande 71 peut également recevoir des entrées additionnelles provenant d'un ou plusieurs utilisateurs. L'entrée d'utilisateur peut fournir des commandes pour commuter totalement ou partiellement l'échappement de l'évacuation 72 sur le système thermo-acoustique 20. L'entrée d'utilisateur peut spécifier un mode pour faire fonctionner le système thermo-acoustique 20 ou le commutateur 71. Le mode peut être un mode de rendement qui optimise le degré de canalisation de l'échappement vers le système thermo-acoustique 20. Le mode peut être un mode de rendement qui sélectionne les temps les plus efficaces pour commuter l'échappement sur le système thermo-acoustique 20.

En plus ou en variante, le dispositif de commande 71 peut surveiller localement ou surveiller à distance des paramètres d'entrée externes à des fins de commutation partielle ou totale de l'évacuation 72 sur le système thermo-acoustique 20. Les paramètres d'entrée externes peuvent comprendre des propriétés d'un système de service de distribution connecté au générateur 100. Les propriétés du système de service de distribution peuvent comprendre le fait que le service de distribution fournit ou non de l'électricité à un système comprenant le générateur 100, un degré d'application de l'électricité, un coût de l'électricité à un instant présent, un facteur de puissance à l'instant présent ou d'autres propriétés. Des commandes pour le dispositif de commande 71 peuvent également être reçues directement du système de service de distribution. Le dispositif de commande 71 peut déterminer le fait de connecter ou non le système thermo-acoustique 20 sur la base des propriétés du service de distribution.

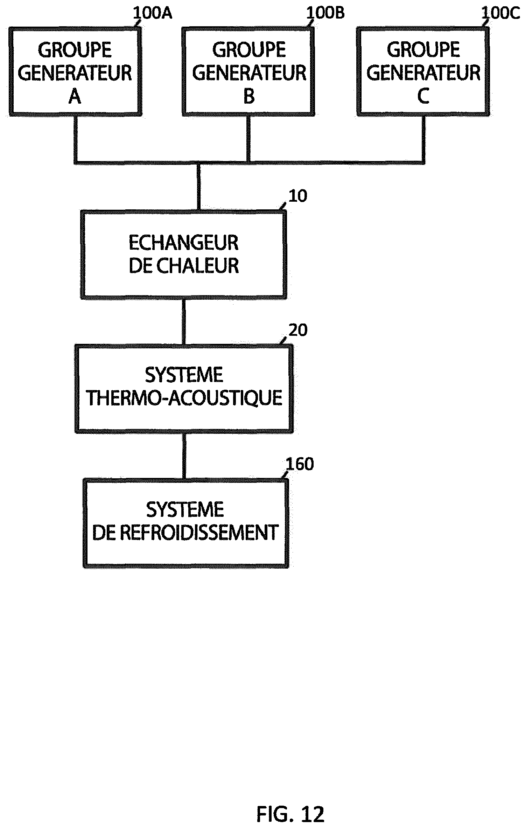

La **figure 12** représente selon l'invention de multiples groupes générateurs 100A-C. Les groupes générateurs 100A-C peuvent être connectés à un bus commun pour délivrer une puissance à une charge commune. Les groupes générateurs 100A-C peuvent être synchronisés ou mis en parallèle. Les groupes générateurs 100A-C peuvent partager un système thermo-acoustique. Par exemple, les lignes d'échappement des groupes générateurs 100A-C peuvent être connectées physiquement à l'échangeur de chaleur 10, au système thermo-acoustique 20 et à un système de refroidissement 160 décrit ci-dessus. Le système de refroidissement 160 peut refroidir un, certains ou tous les moteurs des groupes générateurs 100A-C. Dans un exemple, différentes combinaisons des groupes générateurs 100A-C sont connectées par le dispositif de commande 70 et le commutateur 71 en fonction de la température. En plus ou en variante, le dispositif de commande 70 peut commander de manière sélective quels groupes générateurs 100A-C sont refroidis par le système de refroidissement 160. Des composants additionnels du système d'entraînement 40 peuvent comprendre un collecteur, un ou plusieurs cylindres, une alimentation en carburant, un régulateur de vitesse, un système de lubrification et un démarreur. Le commutateur 71 peut allumer et éteindre la source acoustique d'entrée 25 pour coïncider avec les gaz d'échappement qui sont déviés jusqu'au système thermo-acoustique. Comme décrit dans des exemples ci-dessus, le dispositif de commande 70 peut connecter et déconnecter de manière sélective le système thermo-acoustique 20 des groupes générateurs 100A-C à différents degrés en fonction d'une ou plusieurs entrées comprenant, mais sans limitation, des commandes à distance, de propriétés de service de distribution, des commandes d'utilisateur et des mesures de capteurs.

De plus, le dispositif de commande 70 et un réseau de commutation peuvent connecter et déconnecter de manière indépendante les groupes générateurs 100A-C. Précisément, un ou plusieurs des groupes générateurs 100A-C peuvent être connectés au système thermo-acoustique 20 au même moment où un ou plusieurs autres groupes générateurs 100A-C ne sont pas connectés. Le modèle de connexions peut être basé sur des mesures individuelles effectuées par les groupes générateurs 100A-C ou des commandes spécifiques reçus pour des groupes générateurs individuels. Dans un exemple, le système thermo-acoustique 20 peut être connecté à un des groupes générateurs 100A-C qui peut bénéficier le plus du système thermo-acoustique 20. Par exemple, le réseau de commutation peut connecter seulement le groupe générateur avec la plus haute température d'échappement.

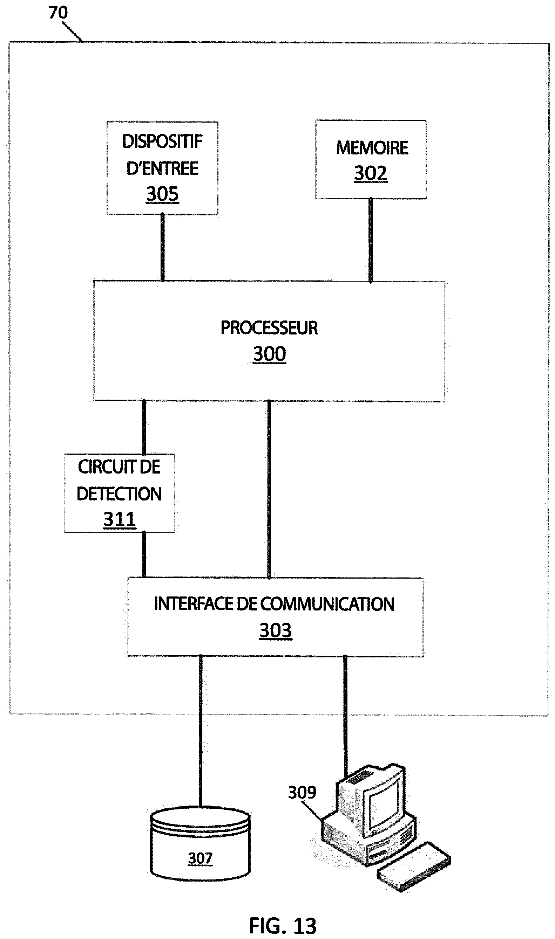

Comme représenté selon l'invention par la **figure 13****,** le dispositif de commande 70 peut comprendre un processeur 300, un dispositif d'entrée 305, une interface de communication 303, une mémoire 302 et un affichage. L'affichage peut être intégré avec le dispositif informatique ou fourni par un poste de travail 309. La base de données 307 peut comprendre des paramètres pour le système thermo-acoustique 20. Des composants additionnels, différents ou moins nombreux peuvent être inclus.

Le circuit de détection 311 peut être un thermomètre ou une thermistance comme expliqué ci-dessus. Le processeur 300 peut commander le commutateur 71 ou un autre aspect du système thermo-acoustique 20 en fonction de la sortie du circuit de détection 311. D'autres types de capteurs pour le circuit de détection 311 sont des détecteurs de gaz, des détecteurs de mouvement, des capteurs de température, des capteurs de pression et des capteurs internes du moteur. Des exemples de détecteurs de gaz peuvent comprendre un ou plusieurs parmi un détecteur d'oxygène, un détecteur de dioxyde de carbone, un détecteur de monoxyde de carbone ou un détecteur d'émission. Le processeur 300 peut commander le commutateur 71 ou le système thermo-acoustique 20 sur la base de la sortie de n'importe lequel de ces capteurs.

Le processeur 300 peut comprendre un processeur général, un processeur de signal numérique, un circuit intégré spécifique à une application (ASIC), un réseau de portes programmable par l'utilisateur (FPGA), un circuit analogique, un circuit numérique, des combinaisons de ceux-ci ou n'importe quel autre processeur actuellement connu ou développé ultérieurement. La mémoire 302 peut être une mémoire volatile ou une mémoire non volatile. Les mémoires peuvent comprendre une ou plusieurs parmi une mémoire morte (ROM), une mémoire vive (RAM), une mémoire flash, une mémoire morte programmable et effaçable électriquement (EEPROM) ou un autre type de mémoire. La mémoire 201 peut être amovible par rapport au dispositif de commande 302 et la mémoire 15 peut être amovible par rapport au moteur, telle qu'une carte mémoire numérique sécurisée (SD).

L'interface de communication 303 peut comprendre une interface physique, une interface électrique et/ou une interface de données. L'interface de communication 303 fournit des communications sans fil et/ou par câble dans n'importe quel format actuellement connu ou développé ultérieurement. En plus des ports d'entrée et des ports de sortie, l'interface de communication 303 peut comprendre n'importe quelle connexion exploitable. Une connexion exploitable peut être une dans laquelle des signaux, des communications physiques et/ou des communications logiques peuvent être transmis et/ou reçus. Une connexion exploitable peut comprendre une interface physique, une interface électrique et/ou une interface de données.

L'interface de communication 303 peut être connectée à un réseau. Le réseau peut comprendre des réseaux câblés (par exemple, Ethernet), des réseaux sans fil ou des combinaisons de ceux-ci. Le réseau sans fil peut être un réseau téléphonique cellulaire, un réseau 802.11, 802.16, 802.20 ou WiMax®. En outre, le réseau peut être un réseau public, comme Internet, un réseau privé, tel qu'un intranet, ou une combinaison de ceux-ci, et peut utiliser une variété de protocoles de mise en réseau maintenant disponibles ou développés ultérieurement comprenant, mais sans limitation, des protocoles de mise en réseau basés sur TCP/IP.

N'importe laquelle des techniques décrites ci-dessus peut être mise en oeuvre sur un support non transitoire lisible par ordinateur, qui peut être un support unique ou de multiples supports, comme une base de données centralisée ou distribuée et/ou des caches et serveurs associés qui stockent un ou plusieurs jeux d'instructions. Le terme « support non transitoire lisible par ordinateur » devra également comprendre n'importe quel support, sauf un signal en soi, qui est capable de stocker, coder ou transporter un jeu d'instructions pour l'exécution par un processeur ou qui fait effectuer à un système informatique n'importe lequel, ou plusieurs, des procédés ou opérations décrits ici.

Dans un mode de réalisation exemplaire, non limitatif, particulier, le support lisible par ordinateur peut comprendre une mémoire à semi-conducteurs telle qu'une carte mémoire ou autre contenant qui loge une ou plusieurs mémoires mortes non volatiles. En outre, le support lisible par ordinateur peut être une mémoire vive ou autre mémoire réinscriptible volatile. De plus, le support lisible par ordinateur peut comprendre un support magnéto-optique ou un support optique, tel qu'un disque ou des bandes ou autre dispositif de stockage pour capturer des signaux d'onde porteuse tels qu'un signal communiqué sur un support de transmission. Un fichier numérique joint à un courriel ou autre archive ou ensemble d'archives d'informations autonomes peut être considéré comme un support de distribution qui est un support de stockage tangible. Par conséquent, la description est considérée comme incluant l'un quelconque ou plusieurs parmi un support lisible par ordinateur ou un support de distribution et d'autres supports équivalents et successeurs, sur lesquels des données ou instructions peuvent être stockées. Le support lisible par ordinateur peut être non transitoire, qui comprend tous les supports lisibles par ordinateurs tangibles.

Dans une variante de mode de réalisation, des mises en oeuvre matérielles dédiées, telles que des circuits intégrés spécifiques à l'application, des réseaux logiques programmables et autres dispositifs matériels, peuvent être construits pour mettre en oeuvre un ou plusieurs des procédés décrits ici. Des applications qui peuvent comprendre l'appareil et les systèmes de divers modes de réalisation peuvent généralement comprendre une variété de systèmes électroniques et informatiques. Un ou plusieurs modes de réalisation décrits ici peuvent mettre en oeuvre des fonctions utilisant au moins deux modules ou dispositifs matériels interconnectés spécifiques avec des signaux de commande et de données associés qui peuvent être communiqués entre et à travers les modules, ou comme des portions d'un circuit intégré spécifique à l'application. En conséquence, le présent système couvre des mises en oeuvre par logiciel, microprogramme et matériel.

## Revendications

1. Générateur (100) comprenant :
un moteur formant système d'entraînement (40) d'un alternateur (50) ;
un système d'échappement ;
un système de refroidissement (60) ;
un premier dispositif thermo-acoustique (21) configuré pour convertir une énergie thermique provenant du système d'échappement pour amplifier une onde acoustique ; et
un deuxième dispositif thermo-acoustique (23) configuré pour convertir une énergie dans l'onde acoustique amplifiée en une entrée pour le système de refroidissement (60), refroidissant l'air admis dans un ou plusieurs cylindres dudit moteur
**caractérisé en ce que** le premier dispositif thermo-acoustique (21) comprend de multiples étages thermo-acoustiques, chaque étage thermo-acoustique étant couplé à un échangeur de chaleur d'échappement ou un radiateur qui transfère la chaleur des gaz ou du tuyau d'échappement à l'étage thermo-acoustique respectif.

2. Générateur (100) selon la revendication 1, dans lequel le premier dispositif thermo-acoustique (21) comprend trois étages thermo-acoustiques.

3. Générateur (100) selon la revendication 2, dans lequel les premier, deuxième et troisième étages sont agencés verticalement.

4. Générateur (100) selon la revendication 2 ou 3, dans lequel chacun parmi le premier étage, le deuxième étage et le troisième étage comprend un échangeur de chaleur froid (10), un régénérateur (11) et un échangeur de chaleur chaud (30).

5. Générateur (100) selon l'une quelconque des revendications précédentes, dans lequel le deuxième dispositif thermo-acoustique (23) est un système thermo-acoustique à un étage.

6. Générateur (100) selon l'une quelconque des revendications précédentes, dans lequel les multiples étages thermo-acoustiques du premier dispositif thermo-acoustique (21) sont logés dans la même enceinte.

7. Générateur (100) selon l'une quelconque des revendications précédentes, dans lequel le premier dispositif thermo-acoustique (21) comprend au moins un amplificateur de conversion chaleur/son en connexion thermique avec au moins un échangeur de chaleur du système d'échappement (60).

8. Générateur (100) selon la revendication 7, dans lequel au moins un échangeur de chaleur comprend un radiateur.

9. Générateur (100) selon l'une quelconque des revendications 7 et 8, dans lequel l'amplificateur de conversion chaleur/son comprend un empilement de plaques parallèles de matériau poreux.

10. Générateur (100) selon l'une quelconque des revendications 4précédentes, dans lequel le deuxième dispositif thermo-acoustique (23) comprend un système de conversion son/froid.

11. Générateur (100) selon l'une quelconque des revendications précédentes, comprenant en outre un milieu de transfert (22) entre le premier dispositif thermo-acoustique (21) et le deuxième dispositif thermo-acoustique (23).

12. Générateur (100) selon la revendication 11, dans lequel le milieu de transfert (22) comprend un gaz noble.

13. Ensemble de générateurs (100A, 100B, 100C) selon l'une quelconque des revendications précédentes, comprenant :
un système d'échappement pour l'ensemble de générateurs ;
un système de refroidissement (160) pour l'ensemble de générateurs ;
un premier dispositif thermo-acoustique (21) configuré pour convertir une énergie thermique provenant du système d'échappement pour amplifier une onde acoustique ; et
un deuxième dispositif thermo-acoustique (23) configuré pour convertir une énergie dans l'onde acoustique amplifiée en une entrée pour le système de refroidissement (160), refroidissant l'air admis dans un ou plusieurs cylindres des moteurs.

## Patentansprüche

1. Generator (100), enthaltend:
einen Motor, der ein Antriebssystem (40) für einen Wechselstromgenerator (50) bildet;
ein Abgassystem;
ein Kühlsystem (60);
eine erste thermoakustische Vorrichtung (21), die dazu ausgelegt ist, um thermische Energie aus dem Abgassystem umzuwandeln, um eine akustische Welle zu verstärken; und
eine zweite thermoakustische Vorrichtung (23), die dazu ausgelegt ist, um Energie in der verstärkten akustischen Welle in einen Eintrag für das Kühlsystem (60) umzuwandeln, wodurch die einem oder mehreren Zylindern des Motors zugeführte Luft gekühlt wird,
**dadurch gekennzeichnet, dass**
die erste thermoakustische Vorrichtung (21) mehrere thermoakustische Stufen umfasst, wobei jede thermoakustische Stufe mit einem Abgaswärmetauscher oder Kühler gekoppelt ist, der die Wärme von den Abgasen oder dem Abgasrohr an die jeweilige thermoakustische Stufe überträgt.

2. Generator (100) nach Anspruch 1, wobei die erste thermoakustische Vorrichtung (21) drei thermoakustische Stufen umfasst.

3. Generator (100) nach Anspruch 2, wobei die erste, die zweite und die dritte Stufe vertikal angeordnet sind.

4. Generator (100) nach Anspruch 2 oder 3, wobei die erste Stufe, die zweite Stufe und die dritte Stufe einen kalten Wärmetauscher (10), einen Regenerator (11) und einen warmen Wärmetauscher (30) enthalten.

5. Generator (100) nach einem der vorangehenden Ansprüche, wobei die zweite thermoakustische Vorrichtung (23) ein einstufiges thermoakustisches System ist.

6. Generator (100) nach einem der vorangehenden Ansprüche, wobei die mehreren thermoakustischen Stufen der ersten thermoakustischen Vorrichtung (21) in demselben Gehäuse aufgenommen sind.

7. Generator (100) nach einem der vorangehenden Ansprüche, wobei die erste thermoakustische Vorrichtung (21) zumindest einen Wärme/Schall-Wandlungsverstärker enthält, der mit zumindest einem Wärmetauscher des Abgassystems (60) in thermischer Verbindung steht.

8. Generator (100) nach Anspruch 7, wobei zumindest ein Wärmetauscher einen Kühler enthält.

9. Generator (100) nach einem der Ansprüche 7 und 8, wobei der Wärme/Schall-Wandlungsverstärker eine Stapelung von parallel verlaufenden Platten aus porösen Materialien enthält.

10. Generator (100) nach einem der vorangehenden Ansprüche, wobei die zweite thermoakustische Vorrichtung (23) ein Schall/Kälte-Wandlungssystem enthält.

11. Generator (100) nach einem der vorangehenden Ansprüche, ferner enthaltend ein Übertragungsmedium (22) zwischen der ersten thermoakustischen Vorrichtung (21) und der zweiten thermoakustischen Vorrichtung (23).

12. Generator (100) nach Anspruch 11, wobei das Übertragungsmedium (22) ein Edelgas enthält.

13. Anordnung von Generatoren (100A, 100B, 100C) nach einem der vorangehenden Ansprüche, enthaltend:
ein Abgassystem für die Anordnung von Generatoren;
ein Kühlsystem (160) für die Anordnung von Generatoren;
eine erste thermoakustische Vorrichtung (21), die dazu ausgelegt ist, um thermische Energie aus dem Abgassystem umzuwandeln, um eine akustische Welle zu verstärken; und
eine zweite thermoakustische Vorrichtung (23), die dazu ausgelegt ist, um Energie in der verstärkten akustischen Welle in einen Eintrag für das Kühlsystem (160) umzuwandeln, wodurch die einem oder mehreren Zylindern des Motors zugeführte Luft gekühlt wird.

## Claims

1. A generator (100) comprising:
an engine forming the drive system (40) of an alternator (50) an exhaust system;
a cooling system (60);
a first thermoacoustic device (21) configured to convert heat energy from the exhaust system to amplify an acoustic wave; and
a second thermoacoustic device (23) configured to convert energy in the amplified acoustic wave to an input for the cooling system (60), cooling air admitted in one or more cylinders of the engine
**characterized in that** the first thermoacoustic device (21) comprises multiple thermoacoustic stages, each thermoacoustic stage being coupled to an exhaust heat exchanger or radiator that transfers heat from the exhaust pipe or gas to the respective thermoacoustic stage..

2. The generator (100) of claim 1, wherein the first thermoacoustic device (21) comprises three thermoacoustic stages.

3. The generator (100) of claim 2, wherein the first, second, and third stages are arranged vertically.

4. The generator (100) of claim 2 or 3, wherein each of the first stage, the second stage, and the third stage includes a cold heat exchanger (10), a regenerator (11), and a hot heat exchanger (30).

5. The generator (100) of any one of the previous claims, wherein the second thermoacoustic device (23) is a one stage thermoacoustic system.

6. The generator (100) of any one of the previous claims, wherein the multiple thermoacoustic stages of the first thermoacoustic device (21) are housed in the same enclosure.

7. The generator (100) of any one of the previous claims, wherein the first thermoacoustic device (21) includes at least one heat to sound amplifier in thermal connection to at least one heat exchanger of the exhaust system (60).

8. The generator (100) of claim 7, wherein at least one heat exchanger includes a radiator.

9. The generator (100) of any one of the previous claims 7 to 8, wherein the heat to sound amplifier includes a stack of parallel plates of porous material.

10. The generator (100) of any one of the previous claims, wherein the second thermoacoustic device (23) includes a sound to cold system.

11. The generator (100) of any one of the previous claims, further comprising a transfer medium (22) between the first thermoacoustic device (21) and the second thermoacoustic device (23).

12. The generator (100) of claim 11, wherein the transfer medium (22) includes a noble gas.

13. A set of generators (100A, 100B, 100C) of any one of the previous claims, comprising:
an exhaust system for the set of generators;
a cooling system (160) for the set of generators;
a first thermoacoustic device (21) configured to convert heat energy from the exhaust system to amplify an acoustic wave; and
a second thermoacoustic device (23) configured to convert energy in the amplified acoustic wave to an input for the cooling system (160), cooling air admitted in one or more cylinders of the engine.
